# EUROPÄISCHE PATENTSCHRIFT

(11) **EP 3 766 680 B1**
(45) Veröffentlichungstag und Bekanntmachung des Hinweises auf die Patenterteilung: **13.09.2023**
(21) Anmeldenummer: 20184953.6
(22) Anmeldetag: 09.07.2020
(51) Int. Cl.: B30B 5/02, F16L 33/02, F15B 15/10, B66F 3/35, F16L 55/115

(54) **ARBEITSSTATION FÜR EINE VERPACKUNGSMASCHINE**
WORK STATION FOR A PACKING MACHINE
STATION DE TRAVAIL POUR UNE MACHINE D'EMBALLAGE

(30) Priorität: 19.07.2019 DE 102019210728
(43) Veröffentlichungstag der Anmeldung: 20.01.2021
(73) Patentinhaber: MULTIVAC Sepp Haggenmüller SE & Co. KG, 87787 Wolfertschwenden (DE)
(72) Erfinder: Mößnang, Konrad, 87439 Kempten (DE); Guggenberger, Tobias, 87700 Memmingen (DE)
(74) Vertreter: Grünecker Patent- und Rechtsanwälte PartG mbB

(56) Entgegenhaltungen:
- EP-A1- 0 115 199
- EP-A1- 3 246 261
- DE-A1-102006 049 067
- DE-B3-102018 205 891
- US-A- 3 121 577
- US-A1- 2016 332 326

## Beschreibung

Die Erfindung bezieht sich auf eine Arbeitsstation für eine Verpackungsmaschine gemäß dem Oberbegriff des Anspruchs 1 sowie auf eine Verpackungsmaschine mit einer solchen Arbeitsstation.

Aus der EP 3 246 261 A1 ist eine Verpackungsmaschine gemäss dem Oberbegriff des Anspruchs 1 bekannt, die eine Blasenvorrichtung zum Bewegen von Komponenten der Verpackungsmaschine umfasst. Dort wird eine Siegelstation offenbart, deren Siegelplatte durch die offenbarte Blasenvorrichtung bewegt wird. Die Blasenvorrichtung enthält eine Blase, die an gegenüberliegenden Enden durch Klammern zusammengeklemmt wird. Die Klammern umfassen jeweils zwei Platten, die durch Schrauben zusammengeklemmt werden, sodass die dazwischenliegenden Abschnitte der Blase durch die Klammern geklemmt werden. Die Gaszufuhr zu der Blase wird in der EP 3 246 261 A1 durch einen Nippel gewährleistet, der in einer Öffnung in der Seitenwand der Blase vorgesehen ist. Daher ist neben den durch die Klammern abgedichteten Öffnungen der Blase eine weitere Öffnung für den Nippel erforderlich. Dies ist nachteilig, da die Gefahr von Leckagen, bspw. durch fehlerhafte oder durch Alterung undichte Dichtstellen an den Öffnungen, erhöht ist. Ein weiterer Nachteil ist, dass in der Siegelplatte Vertiefungen für die Nippel und Gasleitungen für deren Anschluss vorgesehen werden müssen. Außerdem ist die Hubhöhe in der Nähe der Klammern begrenzt, da diese die Blase flach zusammenklemmen.

Aus der DE 10 2006 049 067 A1 ist eine Verpackungsmaschine mit einem pneumatischen Muskel bekannt. Der pneumatische Muskel wird zum Betätigen einer Stanzvorrichtung eingesetzt. Aus der DE 10 2018 205 891 B3 ist eine durch Fluidbeaufschlagung aktivierbare Betätigungseinrichtung mit Rastmechanismus bekannt. Der Rastmechanismus ist dabei an einem Kopfstück vorgesehen, das zum Abschließen eines Schlauch-Innenraums eines Kontraktionsschlauchs vorgesehen ist.

Es ist eine Aufgabe der Erfindung, eine bezüglich der genannten Nachteile verbesserte Arbeitsstation bzw. Verpackungsmaschine anzugeben. Diese Aufgabe wird gelöst durch eine Arbeitsstation gemäß dem Anspruch 1 sowie durch eine Verpackungsmaschine gemäß dem Anspruch 8. Vorteilhafte Weiterbildungen sind in den abhängigen Ansprüchen angegeben.

Die Erfindung sieht eine Arbeitsstation mit den Merkmalen des Anspruchs 1 für eine Verpackungsmaschine vor. Die Arbeitsstation weist ein Hubwerk mit einer Druckquelle und einem mit der Druckquelle verbundenen Hubaktor auf. Der Hubaktor umfasst einen Schlauch mit einer Wand, die eine innere Oberfläche und eine der inneren Oberfläche gegenüberliegende äußere Oberfläche aufweist, sowie einen Verschluss mit einem Verschlussstück, das mit der äußeren Oberfläche in Eingriff ist. Die Arbeitsstation zeichnet sich dadurch aus, dass der Verschluss des Weiteren einen Einsatz umfasst, der mit der inneren Oberfläche in Eingriff ist, wobei der Verschluss einen Klemmabschnitt der Wand des Schlauchs zwischen dem Einsatz und dem Verschlussstück fluiddicht, vorzugsweise gasdicht, klemmt.

Diese Konfiguration weist mehrere Vorteile auf. Zum Beispiel kann dadurch, dass der Einsatz mit der inneren Oberfläche in Eingriff kommt, eine Versorgung des Aktors mit einem Druckmedium durch den Verschluss hindurch ermöglicht werden, sodass auf eine durch die Wand des Schlauches verlaufende Druckmediumsversorgung verzichtet werden kann. Des Weiteren kann durch das Vorsehen des Einsatzes eine Hubhöhe des Hubaktors in der Nähe des Verschlusses erhöht werden.

Als Schlauch kann ein länglicher, flexibler Hohlkörper angesehen werden, der an gegenüberliegenden Enden Öffnungen aufweist. Eine Richtung entlang der länglichen Ausdehnung des Schlauches kann als axiale Richtung angesehen werden. Der Schlauch kann im Wesentlichen durch eine Wand des Schlauches gebildet sein. Diese kann einen Innenraum des Schlauches in radialen Richtungen begrenzen. Die radialen Richtungen können senkrecht zu der axialen Richtung des Schlauches definiert sein. Als Druckquelle können verschiedene Einrichtungen zur Druckerzeugung angesehen werden, z. B. eine Pumpe, ein Kompressor, eine zentrale Druckluftversorgung oder, falls die jeweilige Einrichtung nicht als Teil des Hubwerks sondern bspw. der Verpackungsmaschine vorgesehen ist, ein Anschluss des Hubwerks, der an eine der genannten Einrichtungen anschließbar ist.

In axialer Richtung kann der Innenraum des Schlauches durch die gegenüberliegenden Öffnungen zugänglich sein. Um einen gegenüber der Umgebung des Schlauches abgedichteten Raum zu erzeugen, müssen die gegenüberliegenden Öffnungen dicht verschlossen werden. Dies kann erfindungsgemäß bei mindestens einer Öffnung durch den Verschluss erfolgen. Es können auch beide Öffnungen durch jeweils einen Verschluss gasdicht verschlossen sein. Alternativ kann eine der Öffnungen z. B. gasdicht vernäht sein. Insbesondere kann die Wand des Schlauches den Innenraum des Schlauches in radialen Richtungen begrenzen und der Verschluss kann den Innenraum des Schlauches in axialer Richtung begrenzen.

Es ist denkbar, dass das Verschlussstück eine Vertiefung aufweist, in die der Einsatz einsetzbar ist. Vorzugsweise erstreckt sich die Vertiefung in axialer Richtung, wenn der Verschluss den Klemmabschnitt der Wand klemmt. Dadurch kann ermöglicht werden, dass die Wand des Schlauches in radialer Richtung an eine Seitenwand der Vertiefung angedrückt wird, insbesondere durch den Einsatz.

Es ist vorteilhaft, wenn eine Öffnungsfläche der Vertiefung einen größeren Flächeninhalt aufweist als eine Bodenfläche der Vertiefung. Dies kann ein Einführen des Klemmabschnitts der Wand des Schlauchs in die Vertiefung erleichtern.

Der Einsatz weist einen konischen Teil auf. Dadurch kann eine besonders effektive Klemmung erreicht werden. Besonders günstig ist es, wenn der gesamte Einsatz konisch ausgeführt ist.

Vorzugsweise weist der Verschluss einen Anschluss auf, der dazu konfiguriert ist, ein Arbeitsfluid, vorzugsweise ein Gas, besonders bevorzugt Luft, durch den Verschluss in den Schlauch und/oder aus diesem herauszuleiten. Wie bereits angedeutet, kann dadurch auf eine Druckmediumsversorgung, die durch die Wand des Schlauches hindurch verläuft, verzichtet werden. Dies ist vorteilhaft, da so die abzudichtenden Öffnungen auf die beiden Endöffnungen an den gegenüberliegenden Enden des Schlauches begrenzt werden kann. Außerdem entfällt die Notwendigkeit, an den am Schlauch anliegenden Oberflächen der anzuhebenden Komponenten Vorkehrungen, wie z. B. Aussparungen, für Druckmediumsanschlüsse vorzusehen.

Der Einsatz und das Verschlussstück sind miteinander verschraubbar. Dies kann eine besonders einfache und einfach zu realisierende Art, die Klemmung zu erreichen, ermöglichen. Gleichzeitig kann eine gute Dosierbarkeit der Klemmkraft gewährleistet werden.

Es ist denkbar, dass eine Zugrichtung einer Verschraubung zum Verschrauben des Verschlussstücks mit dem Einsatz in einem Winkel zu einer Hubrichtung des Hubaktors orientiert ist, wobei der Winkel größer als 0° vorzugsweise größer als 45°, besonders bevorzugt 90° ist.

In einer weiteren Variante können zwei Verschlüsse an gegenüberliegenden Abschnitten des Schlauchs vorgesehen sein. Auf diese Weise können die mit Bezug auf den Verschluss erläuterten Vorteile an beiden Enden des Schlauches erreicht werden. Ein Anschluss, wie er bereits weiter oben erläutert wurde, kann an einem oder beiden oder keinem der Verschlüsse vorgesehen sein. Ein Hubaktor mit zwei Verschlüssen mit jeweils einem Anschluss kann den Vorteil aufweisen, dass ein Arbeitsfluid gleichmäßiger eingefüllt und/oder abgelassen werden kann. Dadurch kann ein Kippen der anzuhebenden Komponente vermieden werden.

Die Arbeitsstation kann z. B. eine Siegelstation oder eine Schneidstation oder eine Formstation sein.

Die Erfindung bezieht sich auch auf eine Verpackungsmaschine mit einer Arbeitsstation gemäß einem der vorangehenden Ansprüche.

Die Erfindung bezieht sich auf eine Arbeitsstation sowie eine Verpackungsmaschine der vorstehend beschriebenen Art. Im Folgenden wird ein vorteilhaftes Ausführungsbeispiel anhand von Zeichnungen näher erläutert.
- Figur 1: zeigt eine schematische Seitenansicht einer Verpackungsmaschine.
- Figur 2: zeigt eine perspektivische Ansicht eines Verschlusses eines Hubaktors.
- Figur 3A: zeigt eine schematische Schnittansicht des Verschlusses, wobei die Schnittebene wie in Figur 2 durch die Linie III-III angedeutet verläuft.
- Figur 3B: zeigt die Ansicht aus Figur 3A, wobei der Hubaktor im aufgeblasenen Zustand dargestellt ist.
- Figur 4A: zeigt eine schematische Schnittansicht eines Verschlussstücks des Verschlusses, wobei die Schnittebene wie in Figur 2 durch die Linie IV-IV angedeutet verläuft.
- Figur 4B: zeigt eine schematische Schnittansicht eines Einsatzes des Verschlusses, wobei die Schnittebene wie in Figur 2 durch die Linie IV-IV angedeutet verläuft.

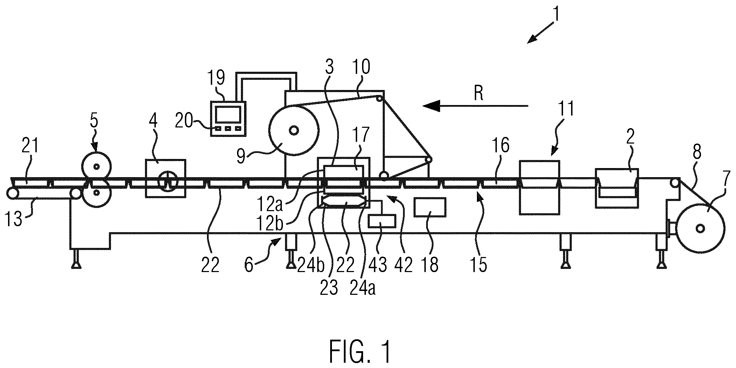

Figur 1 zeigt in schematischer Ansicht eine Verpackungsmaschine 1, die eine Tiefziehverpackungsmaschine sein kann. Die Verpackungsmaschine 1 kann eine oder mehrere Arbeitsstationen aufweisen, insbesondere, wie im gezeigten Ausführungsbeispiel eine Formstation 2, eine Siegelstation 3, eine Querschneideinrichtung 4 und eine Längsschneideinrichtung 5. Es sollte klar sein, dass die Verpackungsmaschine eine oder mehrere der genannten Arbeitsstationen aufweisen kann. Diese können in der genannten Reihenfolge in einer Arbeitsrichtung R an einem Maschinengestell 6 angeordnet sein. Darüber hinaus kann stromabwärts der Formstation 2, als eine weitere Arbeitsstation, eine Leckageerkennungsstation 11 angeordnet sein.

Eingangsseitig kann an dem Maschinengestell 6 eine Zufuhrrolle 7 vorgesehen sein, von der eine erste Folie 8 abgezogen werden kann. Im Bereich der Siegelstation 3 kann ein Folienspeicher 9 vorgesehen sein, von dem eine zweite Folie 10 als Deckelfolie abgezogen werden kann. Ausgangsseitig kann an der Verpackungsmaschine eine Abfuhreinrichtung 13, z. B. in Form eines Transportbandes, vorgesehen sein, mit der fertige, vereinzelte Verpackungen abtransportiert werden können. Ferner kann die Verpackungsmaschine 1 eine nicht dargestellte Vorschubeinrichtung aufweisen, welche die erste Folie 8 ergreifen und vorzugsweise in einem Hauptarbeitstakt taktweise in der Arbeitsrichtung R weitertransportieren kann. Die Vorschubeinrichtung kann zum Beispiel durch seitlich angeordnete Transportketten, vorzugsweise Klammerketten, realisiert sein.

Wie in der dargestellten Ausführungsform gezeigt, kann die Formstation 2 als eine Tiefziehstation ausgebildet sein. Darin können durch Tiefziehen eine oder mehrere Verpackungsmulden 14 in die erste Folie 8 geformt werden. Dabei kann die Formstation 2 derart ausgebildet sein, dass in einer Richtung senkrecht zur Arbeitsrichtung R mehrere Verpackungsmulden nebeneinander gebildet werden können. In Arbeitsrichtung R hinter der Formstation 2 kann eine Einlegestrecke 15 vorgesehen sein. Dort können die in die erste Folie 8 geformten Verpackungsmulden 14 mit Produkt 16 befüllt werden.

Die Siegelstation 3 kann ein Oberwerkzeug 12a und ein Unterwerkzeug 12b umfassen. Diese können dazu konfiguriert sein, eine gasdicht verschließbare, Kammer 17 zu bilden, in der eine Atmosphäre in den Verpackungsmulden 14 vor dem Versiegeln verändert werden kann, zum Beispiel durch Evakuieren und/oder durch Gasspülen mit einem Austauschgas oder mit einem Austausch-Gasgemisch. Das Schließen der Kammer 17 kann, wie im vorliegenden Ausführungsbeispiel, durch Anheben des Unterwerkzeugs 12b und Andrücken an das Oberwerkzeug 12a erfolgen.

Dazu kann die Siegelstation 3 ein Hubwerk 42 umfassen. Dieses kann eine Druckquelle 43 enthalten. Das Hubwerk 42 kann des Weiteren einen Hubaktor 22 aufweisen, der einen Schlauch 23 und einen ersten Verschluss 24a und vorzugsweise einen zweiten Verschluss 24b umfassen kann. Die Druckquelle 43 kann den Hubaktor 22 mit einem Arbeitsfluid versorgen. Das Arbeitsfluid kann von der Druckquelle 43, vorzugsweise mit einem konstanten oder variablen Druck, in den Schlauch 23 eingefüllt werden. Dadurch kann der Schlauch 23 sein Volumen vergrößern, und dadurch das Unterwerkzeug 12b anheben. Wie im vorliegenden Ausführungsbeispiel, kann es sich bei dem Arbeitsfluid um Luft handeln. Bei der Druckquelle kann es sich, wie hier dargestellt, um eine Pumpe oder einen Kompressor handlen.

Es ist zu beachten, dass die Anordnung des Hubwerks 42 bzw. des Hubaktors 22 beispielhaft ist. Das Hubwerk 42 bzw. der Hubaktor 22 kann in jeder der genannten Arbeitsstationen vorgesehen sein, insbesondere in einer, mehreren oder allen der genannten Arbeitsstationen. Des Weiteren kann das Hubwerk 42 bzw. der Hubaktor 22 zum Anheben einer Komponente einer Arbeitsstation, z. B. des Unterwerkzeugs 12b und/oder zum Herunterdrücken einer Komponente einer Arbeitsstaion, z. B. des Oberwerkzeugs 12a, konfiguriert sein.

Die Querschneideinrichtung 4 kann als Stanze ausgebildet sein, welche dazu eingerichtet sein kann, die erste Folie 8 und die zweite Folie 10 in einer Richtung quer zur Arbeitsrichtung R zwischen benachbarten Verpackungsmulden 14 zu durchtrennen. Dabei kann die Querschneideinrichtung 4 derart konfiguriert sein, dass die erste Folie 8 nicht über die gesamte Breite aufgeteilt wird, sondern zumindest in einem Randbereich nicht durchtrennt wird. Dies kann einen kontrollierten Weitertransport durch die Vorschubeinrichtung ermöglichen.

Die Längsschneideinrichtung 5 kann, wie in der dargestellten Ausführungsform, als eine rotierende Rundmesseranordnung ausgebildet sein, mit der die erste Folie 8 und die zweite Folie 10 zwischen benachbarten Verpackungsmulden 14 und am seitlichen Rand der ersten Folie 8 durchtrennt werden kann, wodurch hinter der Längsschneideinrichtung 5 vereinzelte Verpackungen vorliegen können. Die Querschneideinrichtung 4 und die Längsschneideinrichtung 5 können jeweils als eine Arbeitsstation, insbesondere eine Schneidstation, angesehen werden oder zusammen als eine Arbeitsstation, insbesondere eine Schneidstation, angesehen werden.

Die Verpackungsmaschine 1 kann ferner eine Steuereinheit 18 enthalten. Sie kann dazu konfiguriert sein, die in der Verpackungsmaschine 1 ablaufenden Prozesse zu steuern und/oder zu überwachen. Außerdem kann eine Anzeigevorrichtung 19 vorzugsweise mit Bedienelementen 20 vorgesehen und dazu eingerichtet sein, Prozessabläufe in der Verpackungsmaschine 1 für bzw. durch einen Bediener zu visualisieren bzw. zu beeinflussen.

Die generelle Arbeitsweise der Verpackungsmaschine 1 kann wie im Folgenden kurz dargestellt ablaufen.

Die erste Folie 8 kann von der Zufuhrrolle 7 abgezogen und durch die Vorschubeinrichtung in die Formstation 2 transportiert werden. In der Formstation 2 können durch Tiefziehen eine oder mehrere Verpackungsmulden 14 in der ersten Folie 8 gebildet werden. Die Verpackungsmulden 14 können zusammen mit dem umgebenden Bereich der ersten Folie 8 in einem Hauptarbeitstakt schrittweise zu der Leckageerkennungsstation 11 weitertransportiert werden. Dort können sie auf Leckagen geprüft werden, die z.B. beim Formen aufgetreten sein können. Anschließend können die Verpackungsmulden 14 zu der Einlegestrecke 15 weitertransportiert werden, wo sie mit Produkt 16 befüllt werden können.

Anschließend können die befüllten Verpackungsmulden 14 zusammen mit dem sie umgebenden Bereich der ersten Folie 8 durch die Vorschubeinrichtung in die Siegelstation 3 weitertransportiert werden. Die zweite Folie 10 kann in der Siegelstation 3 als Deckelfolie an die erste Folie 8 angesiegelt werden. Danach kann die zweite Folie 10 mit der Vorschubbewegung der ersten Folie 8 weitertransportiert werden. Dabei kann die zweite Folie 10 von dem Folienspeicher 9 abgezogen werden. Durch das Ansiegeln der Deckelfolie 10 an die Verpackungsmulden 14 können verschlossene Verpackungen 21 entstehen.

In den Schneideinrichtungen 4, 5 können die Verpackungen 21 vereinzelt werden, indem die Folien 8, 10 in Quer- bzw. Längsrichtung durchtrennt werden. Zum Vereinzeln kann anstelle der Schneidvorrichtungen 4, 5 auch eine Komplettschnittvorrichtung (nicht gezeigt) eingesetzt werden, welche die Verpackungen 21 in einem Schritt vereinzeln kann.

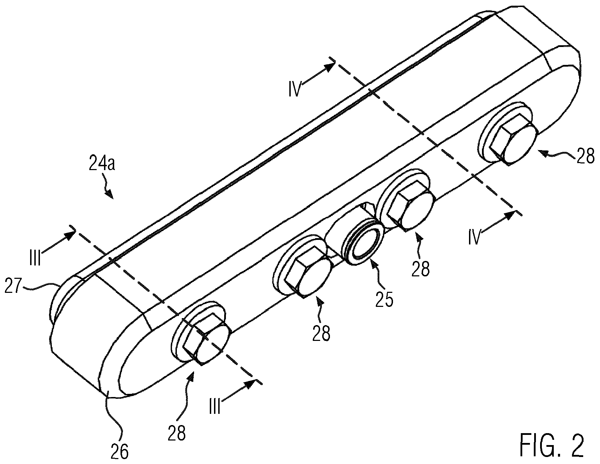

Figur 2 zeigt eine perspektivische Ansicht des ersten Verschlusses 24a. Auch wenn im Folgenden Bezug auf den ersten Verschluss 24a genommen wird, sind die Erläuterungen auch auf den zweiten Verschluss 24b anwendbar. Im vorliegenden Ausführungsbeispiel, kann der erste Verschluss 24a einen Anschluss 25 aufweisen. Dieser kann dazu konfiguriert sein, ein Arbeitsfluid, im vorliegenden Ausführungsbeispiel Luft, durch den ersten Verschluss 24a in den Schlauch 23 hinein und oder aus diesem herauszuleiten. Der zweite Verschluss 24b kann ebenfalls einen Anschluss 25 aufweisen oder kann ohne einen solchen Anschluss ausgeführt sein.

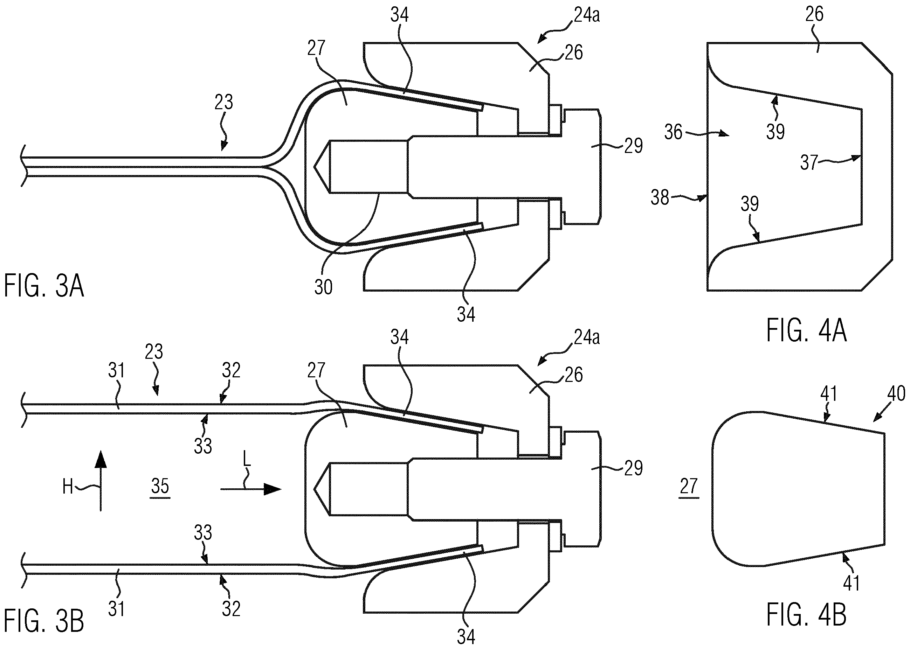

Der erste Verschluss 24a enthält ein Verschlussstück 26 . Der Verschluss 24a enthält des Weiteren einen Einsatz 27. Das Verschlussstück 26 und der Einsatz 27 sind miteinander verschraubbar. Dazu können eine oder mehrere Verschraubungen 28 vorgesehen sein. Jede der Verschraubungen 28 kann zum Beispiel eine Schraube 29 und ein Gewinde 30 umfassen, welches in dem Einsatz 27 vorgesehen sein kann (siehe Figur 3A). Jede der Verschraubungen 28 kann den Einsatz 27 und das Verschlussstück 26 in einer Zugrichtung aufeinander zu ziehen.

Figur 3A zeigt eine schematische Schnittansicht des Verschlusses 24a in einer Perspektive, die in Figur 2 durch die Linie III-III angedeutet ist. In dieser Ansicht ist auch der Schlauch 23 zu erkennen. Dieser ist in einem im Wesentlichen entleerten Zustand dargestellt. Figur 3B zeigt die Ansicht aus Figur 3A. Dort ist jedoch der Schlauch 23 im befüllten Zustand dargestellt. Der Schlauch 23 kann eine Wand 31 aufweisen. Die Wand 31 kann wiederum eine äußere Oberfläche 32 aufweisen. Sie kann des Weiteren eine innere Oberfläche 33 aufweisen. Wie in Figur 3B und 3A zu sehen, kann der Einsatz 27 mit der inneren Oberfläche 33 der Wand 31 eingreifen. Des Weiteren kann das Verschlussstück 26 mit der äußeren Oberfläche 32 der Wand 31 eingreifen. Dabei kann ein Klemmabschnitt 34 der Wand 31 zwischen dem Einsatz 27 und dem Verschlussstück 26 fluiddicht geklemmt werden.

Die Wand 31 des Schlauches 23 kann sich zum Einen in einer axialen Richtung L erstrecken die zwischen dem ersten und dem zweiten Verschluss 24a, 24b definiert sein kann. Die Wand 31 kann sich zum Anderen in einer Umfangsrichtung (nicht dargestellt) erstrecken. Der erste und der zweite Verschluss 24a, 24b können einen Innenraum 35 des Schlauches 23 in der axialen Richtung L abdichten. Die Wand 31 des Schlauches 23 kann den Innenraum 35 in einer Vielzahl von radialen Richtungen, die sich jeweils senkrecht zur axialen Richtung L erstrecken, abdichten. Durch Befüllen des Schlauches 23 kann durch dessen Expansion eine anzuhebende Komponente, wie im vorliegenden Ausführungsbeispiel des Unterwerkzeugs 12b, in einer Hubrichtung H angehoben werden.

In Figur 4A ist lediglich das Verschlussstück 26 in einer Schnittansicht gezeigt, wobei der Schnitt wie in Figur 2 durch die Linie IV-IV angedeutet verläuft. Nun ist noch deutlicher zu erkennen, dass das Verschlussstück 26 eine Vertiefung 36 aufweisen kann. Die Vertiefung kann eine Bodenfläche 37 aufweisen. Sie kann des Weiteren eine Öffnungsfläche 38 aufweisen. Dabei ist zu beachten, dass die Öffnungsfläche 38 selbst keine Materialoberfläche ist, sondern lediglich durch das Material des Verschlussstücks 26 umrandet wird. Die Vertiefung 36 kann außerdem eine Wandfläche 39 aufweisen, die sich zwischen der Bodenfläche 37 und der Öffnungsfläche 38 erstrecken kann. Beim Eingreifen des Verschlussstücks 26 mit der äußeren Oberfläche 32 der Wand 31 kann insbesondere die Wandfläche 39 des Verschlussstücks 26 mit der äußeren Oberfläche 32 der Wand 31 eingreifen. Wie in Figur 4A angedeutet, kann die Öffnungsfläche 38 einen Flächeninhalt aufweisen, der größer ist als der Flächeninhalt der Bodenfläche 37. Die Vertiefung 36 kann demnach konisch ausgeführt sein.

Figur 4B zeigt ebenfalls eine Schnittansicht, wobei der Schnitt wie in Figur 2 durch die Linie IV-IV angedeutet verläuft. In Figur 4B ist jedoch lediglich der Einsatz 27 dargestellt. Wie nun zu erkennen ist, kann der Einsatz 27 einen konischen Teil 40 aufweisen. Außerdem kann der Einsatz 27 eine Klemmfläche 41 aufweisen. Die Klemmfläche 41 und die Wandfläche 39 des-Verschlussstücks 26 können derart aufeinander abgestimmt sein, dass der Einsatz 27 in die Vertiefung 36 des Verschlussstücks 26 einsetzbar ist. Die Klemmfläche 41 kann mit der inneren Oberfläche 33 der Wand 31 des Schlauches 23 eingreifen.

Wie bereits angedeutet, sind alle Ausführungen mit Bezug auf den ersten Verschluss 24a auch auf den zweiten Verschluss 24b anwendbar. Dabei ist zu beachten, dass der zweite Verschluss 24b auch ohne einen Anschluss 25 ausgeführt sein kann. Es sind ebenfalls Ausführungsbeispiele denkbar, in denen auch der erste Verschluss 24a keinen Anschluss 25 aufweist, auch wenn diese wie bereits weiter oben erläutert, weniger bevorzugt sind.

## Patentansprüche

1. Arbeitsstation (2, 3, 4, 5, 11) für eine Verpackungsmaschine (1), wobei die Arbeitsstation (2, 3, 4, 5, 11) ein Hubwerk (42) mit einer Druckquelle (43) und einem mit der Druckquelle (43) verbundenen Hubaktor (22) aufweist und der Hubaktor (22) umfasst:
einen Schlauch (23) mit einer Wand (31), die eine innere Oberfläche (33) und eine der inneren Oberfläche (33) gegenüberliegende äußere Oberfläche (32) aufweist,
einen Verschluss (24a, 24b) mit einem Verschlussstück (26), das mit der äußeren Oberfläche (32) in Eingriff ist, und einem Einsatz (27), der mit der inneren Oberfläche (33) in Eingriff ist, wobei der Verschluss (24a, 24b) einen Klemmabschnitt (34) der Wand (31) des Schlauchs (23) zwischen dem Einsatz (27) und dem Verschlussstück (26) fluiddicht, vorzugsweise gasdicht, klemmt, und wobei der Einsatz (27) und das Verschlussstück (26) miteinander verschraubbar sind,
**dadurch gekennzeichnet, dass** der Einsatz (27) einen konischen Teil (40) aufweist.

2. Arbeitsstation nach Anspruch 1, wobei das Verschlussstück (26) eine Vertiefung (36) aufweist, in die der Einsatz (27) einsetzbar ist.

3. Arbeitsstation nach Anspruch 2, wobei eine Öffnungsfläche (38) der Vertiefung (36) einen größeren Flächeninhalt aufweist als eine Bodenfläche (37) der Vertiefung (36).

4. Arbeitsstation nach einem der vorangehenden Ansprüche, wobei der Verschluss (24a, 24b) einen Anschluss (25) aufweist, der dazu konfiguriert ist, ein Arbeitsfluid, vorzugsweise ein Gas, durch den Verschluss (24a, 24b) in den Schlauch (23) und/oder aus diesem herauszuleiten.

5. Arbeitsstation nach einem der vorangehenden Ansprüche, wobei eine Zugrichtung einer Verschraubung (28) zum Verschrauben des Verschlussstücks (26) mit dem Einsatz (27) in einem Winkel zu einer Hubrichtung (H) des Hubaktors (22) orientiert ist, wobei der Winkel größer als 0° vorzugsweise größer als 45°, besonders bevorzugt 90° ist.

6. Arbeitsstation nach einem der vorangehenden Ansprüche, wobei zwei Verschlüsse (24a, 24b) an gegenüberliegenden Abschnitten des Schlauchs (23) vorgesehen sind.

7. Arbeitsstation nach einem der vorangehenden Ansprüche, wobei die Arbeitsstation (2, 3, 4, 5, 11) eine Siegelstation (3) oder eine Schneidstation (4, 5,) oder eine Formstation (2) ist.

8. Verpackungsmaschine (1) mit einer Arbeitsstation (2, 3, 4, 5, 11) gemäß einem der vorangehenden Ansprüche.

## Claims

1. Working station (2, 3, 4, 5, 11) for a packaging machine (1), wherein the working station (2, 3, 4, 5, 11) has a lifting unit (42) having a pressure source (43) and a lifting actuator (22) connected to the pressure source (43) and wherein the lifting actuator (22) comprises:
a hose (23) comprising a wall (31) having an inner surface (33) and an outer surface (32) disposed opposite the inner surface (33),
a seal (24a, 24b) having a seal cap (26) engaging the outer surface (32), and an insert (27) engaging the inner surface (33), wherein the seal (24a, 24b) clamps a clamping portion (34) of the wall (31) of the hose (23) between the insert (27) and the seal cap (26) in a fluidtight, preferably gastight, manner, and wherein the insert (27) and the seal cap (26) are screwable to one another
**characterized in that** the insert (27) has a tapered portion (40).

2. Working station according to claim 1, wherein the seal cap (26) has a recess (36), in which the insert (27) is insertable.

3. Working station according to claim 2, wherein an opening plane (38) of the recess (36) has a larger area than a bottom surface (37) of the recess (36).

4. Working station according to one of the preceding claims, wherein the seal (24a, 24b) has a connector (25), which is configured to conduct a working fluid, preferably a gas, through the seal (24a, 24b) into the hose (23) and/or out if the hose (23).

5. Working station according to one of the preceding claims, wherein a pulling direction of a screw connection (28) for screwing the seal cap (26) to the insert (27) is oriented in an angle with respect to a lifting direction (H) of the lifting actuator (22), wherein the angel is larger than 0°, preferably larger than 45°, particularly preferred larger than 90°.

6. Working station according to one of the preceding claims, wherein two seals (24a, 24b) are provided on opposite sections of the hose (23).

7. Working station according to one of the preceding claims, wherein the working station (2, 3, 4, 5, 11) is a sealing station (3) or a cutting station (4, 5,) or a forming station (2).

8. Packaging machine (1) having a working station (2, 3, 4, 5, 11) according to one of the preceding claims.

## Revendications

1. Poste de travail (2, 3, 4, 5, 11) pour une machine d'emballage (1), dans lequel le poste de travail (2, 3, 4, 5, 11) présente un mécanisme de levage (42) avec une source de pression (43) et un actionneur de levage (22) relié à la source de pression (43), et l'actionneur de levage (22) comprend :
un tube (23) avec une paroi (31) présentant une surface intérieure (33) et une surface extérieure (32) opposée à la surface intérieure (33),
une fermeture (24a, 24b) avec une pièce de fermeture (26) qui est en prise avec la surface extérieure (32) et un insert (27) qui est en prise avec la surface intérieure (33), dans lequel la fermeture (24a, 24b) serre une section de serrage (34) de la paroi (31) du tube (23) entre l'insert (27) et la pièce de fermeture (26) de manière étanche aux fluides, de préférence étanche aux gaz, et dans lequel l'insert (27) et la pièce de fermeture (26) peuvent être vissés ensemble,
**caractérisé en ce que** l'insert (27) présente une partie conique (40).

2. Poste de travail selon la revendication 1, dans lequel la pièce de fermeture (26) présente une cavité (36) dans laquelle l'insert (27) peut être inséré.

3. Poste de travail selon la revendication 2, dans lequel une surface d'ouverture (38) de la cavité (36) présente une superficie plus grande qu'une surface de fond (37) de la cavité (36).

4. Poste de travail selon l'une quelconque des revendications précédentes, dans lequel la (24a, 24b) présente un raccord (25) qui est configuré pour diriger un fluide de travail, de préférence un gaz, à travers la fermeture (24a, 24b) dans et/ou hors du tube (23).

5. Poste de travail selon l'une quelconque des revendications précédentes, dans lequel une direction de traction d'un raccord vissé (28) pour visser la pièce de fermeture (26) avec l'insert (27) est orientée selon un angle par rapport à une direction de levage (H) de l'actionneur de levage (22), l'angle étant supérieur à 0°, de préférence supérieur à 45°, de manière particulièrement préférée de 90°.

6. Poste de travail selon l'une quelconque des revendications précédentes, dans lequel deux fermetures (24a, 24b) sont prévues sur des sections opposées du tube (23).

7. Poste de travail selon l'une quelconque des revendications précédentes, dans lequel le poste de travail (2, 3, 4, 5, 11) est un poste de scellage (3) ou un poste de découpe (4, 5,) ou un poste de formage (2).

8. Machine d'emballage (1) comprenant un poste de travail (2, 3, 4, 5, 11) selon l'une quelconque des revendications précédentes.
